# EUROPÄISCHE PATENTANMELDUNG

(11) **EP 4 838 315 A1**
(43) Veröffentlichungstag der Anmeldung: **11.11.2026**
(21) Anmeldenummer: 26159271.1
(22) Anmeldetag: 18.02.2026
(51) Int. Cl.: G05B 15/02, G08C 17/02, H02G 3/12, H04L 12/40

(54) **ANORDNUNG UMFASSEND EINEN ERSTEN UND ZWEITEN EINSATZ SOWIE EINEN ERSTEN UND ZWEITEN AUFSATZ DER GEBÄUDEINSTALLATIONSTECHNIK**

(30) Priorität: 05.05.2025 DE 102025117047
(71) Anmelder: Albrecht Jung GmbH & Co. KG, 58579 Schalksmühle (DE)
(72) Erfinder: Schulte, Manuel, 42855 Remscheid (DE); Korte, Bernd, 59348 Lüdinghausen-Seppenrade (DE); Gebhardt, Marc, 58579 Schalksmühle (DE); Brosowski, Mathias, 42399 Wuppertal (DE); Hartmann, Torsten, 58509 Lüdenscheid (DE)
(74) Vertreter: Fobbe, Tobias

(57) **Zusammenfassung**

Vorgestellt wird eine Anordnung umfassend einen ersten und einen, sich von dem ersten Einsatz E1 unterscheidenden, zweiten Einsatz E2 der Gebäudeinstallationstechnik sowie einen ersten und einen zweiten Aufsatz A1, A2 der Gebäudeinstallationstechnik zum Aufsetzen auf den ersten beziehungsweise zweiten Einsatz E1, E2. Besonders dabei ist, dass der erste und zweite Einsatz E1, E2 gebäudesteuerungssystemspezifisch und der erste und zweite Aufsatz A1, A2 als gebäudesteuerungssystemunspezifische Wertgeber ausgebildet sind, so dass der erste und zweite Aufsatz A1, A2 jeweils mit dem ersten und zweiten Einsatz E1, E2 gebäudesteuerungssystemübergreifend kompatibel ist.

## Beschreibung

Die Erfindung betrifft eine Anordnung umfassend einen ersten und einen, sich von dem ersten Einsatz unterscheidenden, zweiten Einsatz der Gebäudeinstallationstechnik sowie einen ersten und einen zweiten Aufsatz der Gebäudeinstallationstechnik zum Aufsetzen auf den ersten beziehungsweise zweiten Einsatz.

In der Gebäudeinstallationstechnik gibt es unterschiedliche Bauformen für die Unterputzmontage von intelligenten Geräten. Diese Geräte besitzen Hard- und Software zur Verarbeitung von Daten, sowie Kommunikationsschnittstellen zur Weiterleitung in ein Gebäudesteuerungssystem oder zur direkten Steuerung von Aktoren. Die Geräte bestehen aus einer Einsatz-Aufsatz-Kombination beziehungsweise einem Einsatz oder Aufsatz. Jede dieser Kombinationen ist für den entsprechenden Anwendungsfall konzipiert. Daher bedingen unterschiedliche Gebäudesteuerungssysteme, beispielsweise drahtgebundene und funkgebundene Systeme, dass je Gebäudesteuerungssystem ein Aufsatz mit einem bestimmten Einsatz zu kombinieren ist.

Nicht zuletzt deshalb sind auch sogenannte Funktionsmodule zur Installation in der Unterputzdose hinter gewisse Einsätze bekannt geworden (siehe DE 10 2021 132 395 A1 oder DE 10 2024 126 894 B3), um - die Kopplung zwischen Einsätzen und Aufsätzen zur Vermeidung einer Neuanschaffung erhaltend - dennoch eine gewisse Freiheit in Bezug auf die Verwendung bestimmter Funktionalitäten, beispielsweise die Nachrüstung einer mittels mobilen Endgeräts schaltbaren Leuchte, zu gewinnen.

Nachteilig dabei ist, dass derartige Funktionsmodule aufwendig in der Nachrüstung sind und vorbekannte Einsatz-Aufsatz-Kombinationen für unterschiedliche Gebäudesteuerungssysteme, beispielsweise drahtgebundene und funkgebundene Systeme, inkompatibel sind, so dass eine Vielzahl von unterschiedlichen Einsätzen und Aufsetzen erforderlich ist, was mit suboptimalen Stückkosten und nicht unerheblichem Planungs- und Installationsaufwand einhergeht.

Ausgehend von diesem diskutierten Stand der Technik liegt der Erfindung die Aufgabe zugrunde, eine Anordnung umfassend einen ersten und einen, sich von dem ersten Einsatz unterscheidenden, zweiten Einsatz der Gebäudeinstallationstechnik sowie einen ersten und einen zweiten Aufsatz der Gebäudeinstallationstechnik zum Aufsetzen auf den ersten beziehungsweise zweiten Einsatz bereitzustellen, die es ermöglicht, die Stückkosten zu reduzieren und den Planungs- und Installationsaufwand abzusenken.

Gelöst wird diese Aufgabe durch eine Anordnung, wobei der erste und zweite Einsatz gebäudesteuerungssystemspezifisch und der erste und zweite Aufsatz als gebäudesteuerungssystemunspezifische Wertgeber ausgebildet sind, so dass der erste und zweite Aufsatz jeweils mit dem ersten und zweiten Einsatz gebäudesteuerungssystemübergreifend kompatibel ist.

Der große Vorteil der erfindungsgemäßen Anordnung besteht darin, dass eine gebäudesteuerungssystemübergreifende Kompatibilität des ersten und zweiten Aufsatzes jeweils mit dem ersten und zweiten Einsatz gewährleistet ist. Dabei sind der erste und zweite Einsatz gebäudesteuerungssystemspezifisch ausgebildet, wobei beispielsweise der erste Einsatz einen KNX-Busankoppler aufweist, während der zweite Einsatz beispielsweise einen Bluetooth-Funksender aufweist. So können einerseits unterschiedliche Gebäudesteuerungssysteme realisiert werden, während die Stückkosten und der Planungs- und Installationsaufwand reduziert werden, indem der erste und der zweite Aufsatz (die, im Gegensatz zu dem ersten und zweiten gebäudesteuerungssystemspezifischen Einsatz, auch identisch sein können) jeweils als gebäudesteuerungssystemunspezifische Wertgeber ausgebildet sind.

Als Gebäudesystem gilt beispielsweise KNX oder JUNG Home. Ein Gebäudesystem ist entweder drahtgebunden oder funkbasiert.

Bevorzugt umfasst der erste Einsatz einen Busankoppler, insbesondere einen KNX-Busankoppler, und der zweite Einsatz einen Funksender und ein galvanisch getrenntes Netzteil. Dabei kommuniziert der Funksender drahtlos mit einem Gateway eines Gebäudeautomatisierungssystems, insbesondere via Bluetooth Mesh. Besonders bevorzugt erfolgt eine Kommunikation zwischen dem ersten und zweiten Einsatz und dem ersten und zweiten Aufsatz über eine Steckerbuchsenleiste und die in die Steckerbuchsenleiste einsetzbare mehrpolige Steckerleiste. Damit wird vorteilhafterweise die gebäudesteuerungssystemübergreifende Kompatibilität für eine Vielzahl von unterschiedlichen Gebäudesteuerungssystemen sichergestellt. In einer mechanisch besonders intuitiv handzuhabenden und robusten Ausgestaltung der vorstehend beschriebenen Ausführungsform weist der erste und zweite Einsatz jeweils eine Steckerbuchsenleiste und der erste und zweite Aufsatz jeweils eine in die Steckerbuchsenleiste einsetzbare mehrpolige Steckerleiste auf.

Gemäß einer Weiterbildung der erfindungsgemäßen Anordnung, weist der erste und zweite Einsatz jeweils eine Leiterplatte mit mehreren Klemmanschlüssen für Kabelgut auf.

Gemäß einer Weiterbildung der erfindungsgemäßen Anordnung ist der erste und zweite Aufsatz teilweise Unterputz und teilweise Aufputz angeordnet, während der erste und zweite Einsatz in einer Unterputzdose installiert sind. Besonders bevorzugt sind dabei auf den ersten und zweiten Aufsatz Designabdeckungen aufgesetzt, die den Aufputz befindlichen Teil des ersten und zweiten Aufsatzes abdecken. Dadurch, dass die Vielfalt der Aufsätze reduziert ist, wird auf geschickte Art und Weise in dieser Ausführungsform auch die Vielfalt der unterschiedlichen, auf die (bezüglich der Vielfalt reduzierten Aufsätze) aufsetzbaren Designabdeckungen bezüglich des Standes der Technik reduziert.

Nachfolgend ist die Erfindung unter Bezugnahme auf die beigefügten Figuren anhand diverser Ausführungsbeispiele beschrieben. Es zeigen:
- **Fig. 1:**: eine schematische Darstellung zweier vorbekannter Anordnungen mit jeweils einem Einsatz und Aufsatz, wobei sowohl der Aufsatz als auch der Einsatz gebäudesystemspezifisch ausgeführt sind und nur die Designabdeckung identisch beziehungsweise kompatibel ist,
- **Fig. 2:**: eine schematische Darstellung einer erfindungsgemäßen Anordnung, und
- **Fig. 3:**: eine schematische Darstellung einer weiteren erfindungsgemäßen Anordnung.

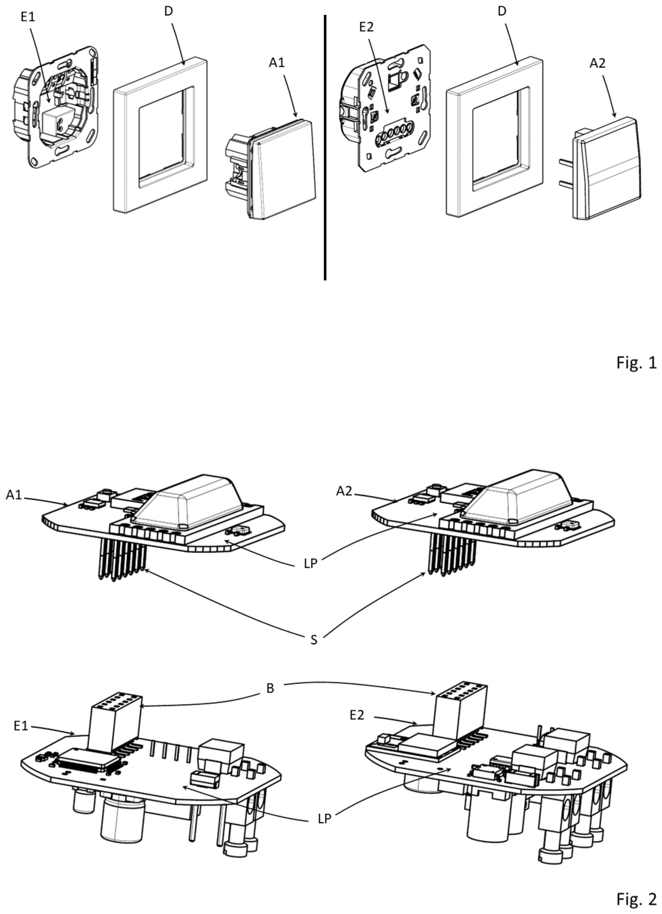

Figur 1 zeigt eine schematische Darstellung zweier vorbekannter Anordnungen mit jeweils einem Einsatz und Aufsatz, wobei sowohl der Aufsatz als auch der Einsatz gebäudesystemspezifisch ausgeführt sind und nur die Designabdeckung identisch ist. Vorliegend weist der Einsatz E1 (links) keine Funktionselektronik auf, während der Einsatz E2 (rechs) Funktionselektronik aufweist. Beide Aufsätze A1, A2 weisen Funktionselektronik auf. Erkennbar ist, dass beide Kombinationen von Aufsätzen A1, A2 und Einsätzen E1, E2 gebäudesteuerungssystemspezifisch sind. Als Gebäudesystem gilt beispielsweise KNX oder JUNG Home. Eine gebäudesteuerungssystemübergreifende Kompatibilität des ersten und zweiten Aufsatzes A1, A2 jeweils mit dem ersten und zweiten Einsatz E1, E2 ist nicht gegeben. Dieses erhöht die Stückkosten und den Planung- und Installationsaufwand.

Figur 2 zeigt eine schematische Darstellung einer erfindungsgemäßen Anordnung. Eine solche erfindungsgemäßen Anordnung ist dadurch gekennzeichnet, dass der erste und zweite Einsatz E1, E2 gebäudesteuerungssystemspezifisch und der erste und zweite Aufsatz A1, A2 als gebäudesteuerungssystemunspezifische Wertgeber ausgebildet sind. Damit wird - einen höheren Entwicklungsmehraufwand bewusst in Kauf nehmend - gewährleistet, dass der erste und zweite Aufsatz A1, A2 jeweils mit dem ersten und zweiten Einsatz E1, E2 gebäudesteuerungssystemübergreifend kompatibel ist. Vorliegend sind die Aufsätze A1, A2 identisch ausgeführt, wobei jeder der Aufsätze A1, A2 mit dem ersten oder zweiten Einsatz E1, E2 - obwohl unterschiedliche Gebäudesysteme betreffend - kompatibel ist. Der erste und zweite Einsatz E1, E2 und auch der erste und zweite Aufsatz A1, A2 weisen in dieser Ausführungsform jeweils eine Leiterplatte LP mit mehreren Klemmanschlüssen für Kabelgut auf (beispielsweise zur Energieversorgung oder kabelgebundenen Kommunikation). Der Einfachheit halber ist eine Designabdeckung (die auf die jeweiligen Aufsätze A1, A2 aufgesetzt wird) nicht dargestellt.

Der erste Einsatz E1 weist in dieser Ausgestaltung einen KNX-Busankoppler und der zweite Einsatz E2 einen Funksender und ein galvanisch getrenntes Netzteil auf. Die Kommunikation zwischen den Einsätzen E1, E2 und den Aufsätzen A1, A2 erfolgt über eine Steckerbuchsenleiste B und eine in die Steckerbuchsenleiste B einsetzbare mehrpolige Steckerleiste S, beispielsweise eine 10-polige oder 12-polige Steckerleiste S. Zudem ist durch eine mehrpolige Steckerleiste S, die sich mindestens 2cm horizontal erstreckt, sichergestellt, dass eine optimale horizontale Ausrichtung der aufzusteckenden Aufsätze A1, A2 erreicht wird. Dabei weist der erste und zweite Einsatz E1, E2 jeweils eine Steckerbuchsenleiste B und der erste und zweite Aufsatz A1, A2 jeweils eine in die Steckerbuchsenleiste B einsetzbare mehrpolige Steckerleiste S auf. Durch die Mehrpoligkeit, insbesondere durch eine Polanzahl größer gleich 10, wird gleichzeitig sichergestellt, dass die Abzugskräfte der Aufsätze A1, A2 ausreichend hoch bemessen sind und ein versehentliches Abziehen vermieden ist. Auch wird eine besonders einfache Montage durch ein geführtes Aufstecken ermöglicht. Dabei ist vorteilhafterweise die Steckerbuchsenleiste B außermittig angeordnet, so dass einer vertauschten Montage des Aufsatzes A1, A2 bezüglich des Einsatzes E1, E2 wirksam vorgebeugt wird.

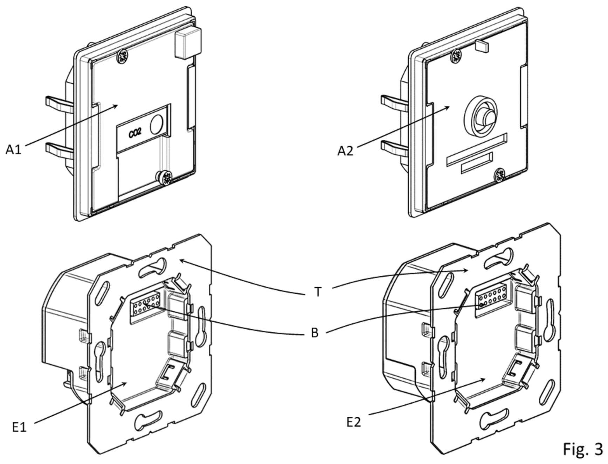

Figur 3 zeigt eine weitere schematische Darstellung einer erfindungsgemäßen Anordnung. Dabei unterscheiden sich die Aufsätze A1, A2, wobei sie dennoch jeweils auf die unterschiedlichen Einsätze E1, E2 aufgesetzt werden können beziehungsweise mit ihnen kompatibel sind. Dieses ist erneut durch die Steckerbuchsenleiste B und die in die Steckerbuchsenleiste B einsetzbare mehrpolige Steckerleiste S jedes Aufsatzes A1, A2 sichergestellt. Der Einsatz E1, E2 ist mittels eines Tragrings T an einer Dose (nicht dargestellt) zu montieren. Dann sind der erste und zweite Aufsatz A1, A2 teilweise Unterputz und teilweise Aufputz angeordnet, während der erste und zweite Einsatz E1, E2 in der Dose installiert sind, wobei auf den ersten und zweiten Aufsatz A1, A2 Designabdeckungen aufgesetzt sind (der Einfachheit halber nicht dargestellt), die den Aufputz befindlichen Teil des ersten und zweiten Aufsatzes A1, A2 abdecken.

### Bezugszeichenliste

- A1, A2: Aufsatz
- B: Steckerbuchsenleiste
- D: Designabdeckung
- E1, E2: Einsatz
- LP: Leiterplatte
- S: Steckerleiste
- T: Tragring

## Patentansprüche

1. Anordnung umfassend einen ersten und einen, sich von dem ersten Einsatz (E1) unterscheidenden, zweiten Einsatz (E2) der Gebäudeinstallationstechnik sowie einen ersten und einen zweiten Aufsatz (A1, A2) der Gebäudeinstallationstechnik zum Aufsetzen auf den ersten beziehungsweise zweiten Einsatz (E1, E2), **dadurch gekennzeichnet, dass** der erste und zweite Einsatz (E1, E2) gebäudesteuerungssystemspezifisch und der erste und zweite Aufsatz (A1, A2) als gebäudesteuerungssystemunspezifische Wertgeber ausgebildet sind, so dass der erste und zweite Aufsatz (A1, A2) jeweils mit dem ersten und zweiten Einsatz (E1, E2) gebäudesteuerungssystemübergreifend kompatibel ist.

2. Anordnung nach Anspruch 1, **dadurch gekennzeichnet, dass** der erste Einsatz (E1) einen Busankoppler und der zweite Einsatz (E2) einen Funksender und ein galvanisch getrenntes Netzteil umfasst.

3. Anordnung nach Anspruch 2, **dadurch gekennzeichnet, dass** der Busankoppler ein KNX-Busankoppler ist.

4. Anordnung nach Anspruch 2 oder 3, **dadurch gekennzeichnet, dass** der Funksender drahtlos mit einem Gateway eines Gebäudeautomatisierungssystems, insbesondere via Bluetooth Mesh, kommuniziert.

5. Anordnung nach einem der Ansprüche 1 bis 4, **dadurch gekennzeichnet, dass** eine Kommunikation zwischen dem ersten und zweiten Einsatz (E1, E2) und dem ersten und zweiten Aufsatz (A1, A2) über eine Steckerbuchsenleiste (B) und eine in die Steckerbuchsenleiste (B) einsetzbare mehrpolige Steckerleiste (S) erfolgt.

6. Anordnung nach Anspruch 5, **dadurch gekennzeichnet, dass** der erste und zweite Einsatz (E1, E2) jeweils eine Steckerbuchsenleiste (B) und der erste und zweite Aufsatz (A1, A2) jeweils eine in die Steckerbuchsenleiste (B) einsetzbare mehrpolige Steckerleiste (S) aufweist.

7. Anordnung nach einem der Ansprüche 1 bis 6, **dadurch gekennzeichnet, dass** der erste und zweite Einsatz (E1, E2) jeweils eine Leiterplatte (LP) mit mehreren Klemmanschlüssen für Kabelgut aufweisen.

8. Anordnung nach einem der Ansprüche 1 bis 7, **dadurch gekennzeichnet, dass** der erste und zweite Aufsatz (A1, A2) teilweise Unterputz und teilweise Aufputz angeordnet, während der erste und zweite Einsatz (E1, E2) in einer Dose installiert sind.

9. Anordnung nach Anspruch 8, **dadurch gekennzeichnet, dass** auf den ersten und zweiten Aufsatz (A1, A2) Designabdeckungen aufgesetzt sind, die den Aufputz befindlichen Teil des ersten und zweiten Aufsatzes (A1, A2) abdecken.
